# EUROPÄISCHE PATENTSCHRIFT

(11) **EP 1 452 284 B1**
(45) Veröffentlichungstag und Bekanntmachung des Hinweises auf die Patenterteilung: **05.12.2007**
(21) Anmeldenummer: 04100746.9
(22) Anmeldetag: 26.02.2004
(51) Int. Cl.: B27B 5/32, B24B 45/00, B24B 23/02, B23B 31/40

(54) **Schnellspannmutter für scheibenförmige Werkzeuge**
Quick-change nut for disc-shaped tools
Ecrou à serrage rapide pour outils discoides

(30) Priorität: 28.02.2003 DE 10308743
(43) Veröffentlichungstag der Anmeldung: 01.09.2004
(73) Patentinhaber: HILTI Aktiengesellschaft, 9494 Schaan (LI)
(72) Erfinder: Blatz, Thomas, 86916, Kaufering (DE)
(74) Vertreter: Wildi, Roland

(56) Entgegenhaltungen:
- WO-A-94/01689
- US-A- 4 205 572
- US-A- 4 768 909
- US-A- 5 545 078

## Beschreibung

Die Erfindung bezeichnet eine Schnellspannmutter für scheibenförmige Werkzeuge, wie Kreissägeblätter oder Trennscheiben gemäß dem Oberbegriff des Anspruchs 1. Eine solche Spannmutter ist aus der DE-A-3605821 bekannt.

Derartige Schnellspannmuttern erzeugen über das Gewinde der antreibenden Arbeitsspindel die zur sicheren haftreibschlüssigen Befestigung des scheibenförmigen Werkzeuges notwendige Axialkraft. Zur schnellen, werkzeuglosen Montage / Demontage der Schnellspannmutter weist diese Verspannmittel zur axialen Verspannung / Entspannung auf.

Nach der DE3605821 weist eine Schnellspannmutter zur Erzeugung einer radialen Verspannung zwei sich längs der Achse erstreckende Blattfedern auf, die je ein halbringförmiges Gewindebogenstück radial vorspannen. Nach der DE3210448 spannt eine umlaufende, sich längs der Achse erstreckende Blattfeder zwei halbringförmige Gewindebogenstücke radial vor.

Nach der DE10002263 weist eine Schnellspannmutter für ein scheibenförmiges Werkzeug, zur Erzeugung einer radialen Verspannung auf radial versetzbare Spreizkörper zwei sich längs der Achse erstreckende Blattfedern auf. Die zwischen einem Gewindeteil und einem Axialanschlag radial versetzbaren Spreizkörper sind bezüglich Verunreinigungen störungsempfindlich, welche die zur Verspannung / Entspannung notwendige Gleitbewegung der Spreizkörper zwischen dem Gewindeteil und dem Axialanschlag blockieren können.

Die Aufgabe der Erfindung besteht in der Realisierung einer einfachen, bezüglich Verunreinigungen unempfindlicheren Schnellspannmutter.

Die Aufgabe wird im Wesentlichen durch die Merkmale des unabhängigen Anspruchs 1 gelöst. Vorteilhafte Weiterbildungen ergeben sich aus den Unteransprüchen.

Im Wesentlichen weist eine Schnellspannmutter zur haftreibschlüssigen Befestigung eines scheibenförmigen Werkzeuges an einem Aussengewinde einer um eine Drehachse antreibenden Arbeitsspindel ein zugeordnetes Innengewindeteil und ein manuell versetzbares Verspannmittel zur axialen Verspannung / Entspannung des Innengewindeteiles bezüglich des Werkzeuges auf, wobei dem Innengewindeteil werkzeugseitig zumindest eine sich im Wesentlichen parallel zur Drehachse erstreckende Blattfeder zugeordnet ist, über welche das Innengewindeteil axial federnd mit dem Werkzeug verspannbar ist.

Da die Axialkraft längs über die sich parallel zur Drehachse erstreckende Blattfeder übertragen wird, ist deren Formstabilität zur haftreibschlüssigen Verspannung notwendig. Bei Überschreiten einer kritischen Beanspruchung (Euler-Knicken) geht die Blattfeder aus dieser flachen, instabilen Form spontan in eine stabilere Knickform bzw. Beulform über, welche bei gleicher Deformation geringere Axialkräfte überträgt und somit entspannt wird. Somit ist ein über das Verspannmittel gesteuertes Ausknicken bzw. Ausbeulen zur Verspannung / Entspannung der Schnellspannmutter nutzbar. Eine Gleitbewegung der Blattfeder zum Gewindeteil oder zum Werkzeug findet bei der Verspannung / Entspannung nicht statt.

Vorteilhaft ist der Blattfeder werkzeugseitig ein bezüglich des Innengewindeteiles axial versetzbarer, weiter vorteilhaft kreisringförmiger, Axialanschlag zugeordnet, wodurch die Blattfeder nicht unmittelbar mit dem Werkzeug in Presskontakt kommt, wodurch plastische Verformungen am Werkzeug vermieden werden.

Vorteilhaft sind mehrere einzelne Blattfedern umfänglich verteilt angeordnet, wodurch die Axialkräfte rotationssymmetrisch verteilt sowie vervielfacht werden, ohne durch eine umlaufende Krümmung der Blattfeder das Knick- bzw. Beulverhalten zu verändern.

Vorteilhaft weist die Blattfeder einen gleichmässig flachen, ebenen Federbereich auf, wodurch innerhalb dieses Federbereiches ein definiertes Knicken (Euler-Knicken) in der Art eines globalen Versagens erfolgt.

Alternativ vorteilhaft weist die Blattfeder einen gleichmässig flachen, axialen Kreiszylindermantelsegmentstreifen als Federbereich auf, wodurch innerhalb dieses Federbereiches ein definiertes Beulen in der Art eines lokalen Versagens erfolgt.

Vorteilhaft ist die Normale der Blattfeder radial orientiert, wodurch das Knicken / Beulen notwendig in radialer Richtung erfolgt und durch versetzbare Radialanschläge manuell steuerbar ist.

Vorteilhaft bildet der Axialanschlag oder das Innengewindeteil einen nach aussen orientierten, Innenradialanschlag und das manuell versetzbare Verspannmittel einen nach innen orientierten Aussenradialanschlag für die zwischen beiden angeordnete Blattfeder aus, wodurch das Knicken / Beulen manuell unterbindbar ist.

Vorteilhaft ist das Verspannmittel als eine axial manuell versetzbare Hülse ausgebildet, wodurch in der als Aussenradialanschlag wirksamen Verspannungsposition das Knicken / Beulen sicher verhindert und in der nicht als Aussenradialanschlag wirksamen Entspannungsposition das zur Entspannung führende Knicken / Beulen zugelassen wird.

Alternativ vorteilhaft ist die Normale der Blattfeder umfänglich orientiert, wodurch das Knicken / Beulen notwendig in tangentialer Richtung erfolgt und durch versetzbare Tangentialanschläge manuell steuerbar ist.

Vorteilhaft bildet der Axialanschlag oder das Innengewindeteil einen tangential orientierten, Tangentialanschlag und das manuell versetzbare Verspannmittel einen entgegengesetzt tangential orientierten Gegentangentialanschlag für die zwischen beiden angeordnete Blattfeder aus, wodurch das Knicken / Beulen durch axiale Versetzung des Verspannmittels manuell unterbindbar ist.

Vorteilhaft ist das Verspannmittel als ein manuell drehversetzbarer Käfig ausgebildet, wodurch in der Verspannungsposition des Verspannmittels das Knicken / Beulen sicher verhindert und in der durch Aufbringen einer Tangentialkraft erzwungenen Entspannungsposition das zur Entspannung führende Knicken / Beulen initiiert wird.

Alternativ vorteilhaft ist das Verspannmittel als ein manuell axial versetzbarer Käfig ausgebildet, der einen tangential orientierten Tangentialanschlag und einen entgegengesetzt tangential orientierten Gegentangentialanschlag für die zwischen beiden in einem Durchbruch angeordnete Blattfeder ausbildet, wodurch das Knicken / Beulen durch axiale Versetzung des Verspannmittels manuell unterbindbar ist.

Die Erfindung wird bezüglich von vorteilhaften Ausführungsbeispielen näher erläutert mit:
- Fig. 1: als Schnellspannmutter im Längsschnitt
- Fig. 2: als Explosionsdarstellung der Schnellspannmutter
- Fig. 3: als Explosionsdarstellung einer Variante
- Fig. 4: als Variante im achsversetzten Längsschnitt
- Fig. 5: als Explosionsdarstellung einer Variante
- Fig. 6: als Variante im achsversetzten Längsschnitt

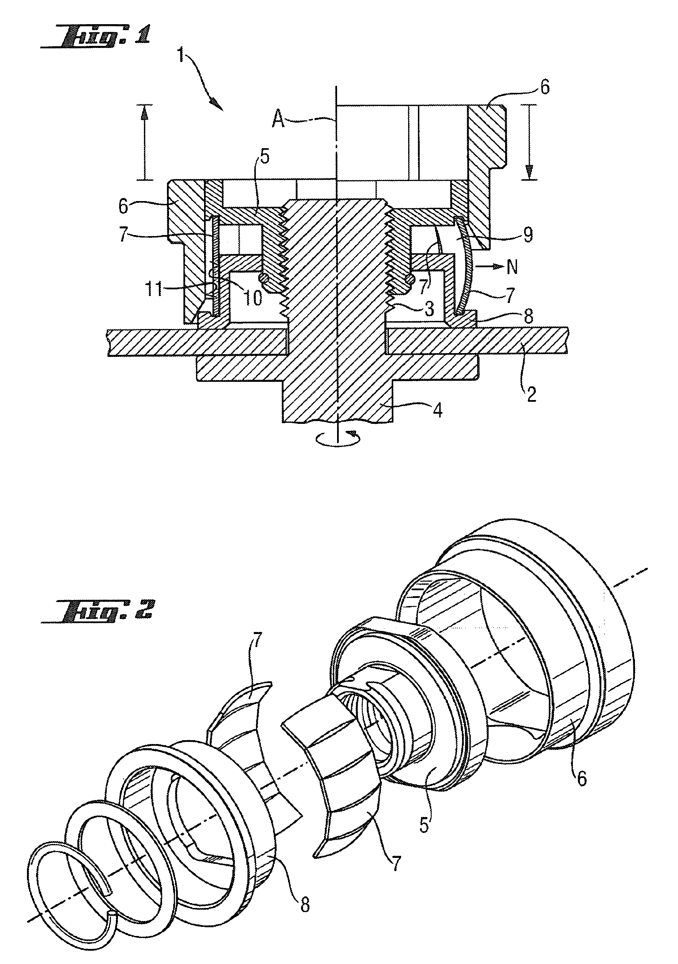

Nach Fig. 1 weist eine Schnellspannmutter 1 zur haftreibschlüssigen Befestigung eines scheibenförmigen Werkzeuges 2 an einem Aussengewinde 3 einer um eine Drehachse A antreibenden Arbeitsspindel 4 ein zugeordnetes Innengewindeteil 5 und ein manuell versetzbares Verspannmittel 6 in Form einer axial manuell versetzbaren Hülse auf. Dem Innengewindeteil 5 sind werkzeugseitig mehrere, sich parallel zur Drehachse A erstreckende Blattfedern 7 zugeordnet, denen werkzeugseitig ein bezüglich des Innengewindeteiles 5 axial versetzbarer, kreisringförmiger Axialanschlag 8 zugeordnet ist. Durch die Blattfeder 7 ist das Innengewindeteil 5 axial federnd über den Axialanschlag 8 mit dem Werkzeug 2 verbunden und verspannt. Die Blattfedern 7 weisen einen gleichmässig flachen, Kreiszylindermantelsegmentstreifen als Federbereich 9 auf, deren Normale N radial orientiert ist. Im rechten Halbschnitt ist die axiale Entspannung des Innengewindeteiles 5 bezüglich des Werkzeuges 2 dargestellt, bei welcher die Blattfeder 7 frei radial nach aussen ausbeulen kann. Bei der im linken Halbschnitt dargestellten axialen Verspannung bildet der Axialanschlag 8 einen nach aussen orientierten Innenradialanschlag 10 und das werkzeugseitig versetzte Verspannmittel 6 einen nach innen orientierten Aussenradialanschlag 11 für die zwischen beiden angeordnete Blattfeder 7 aus, welche ein Beulen der Blattfeder 7 unterbindet.

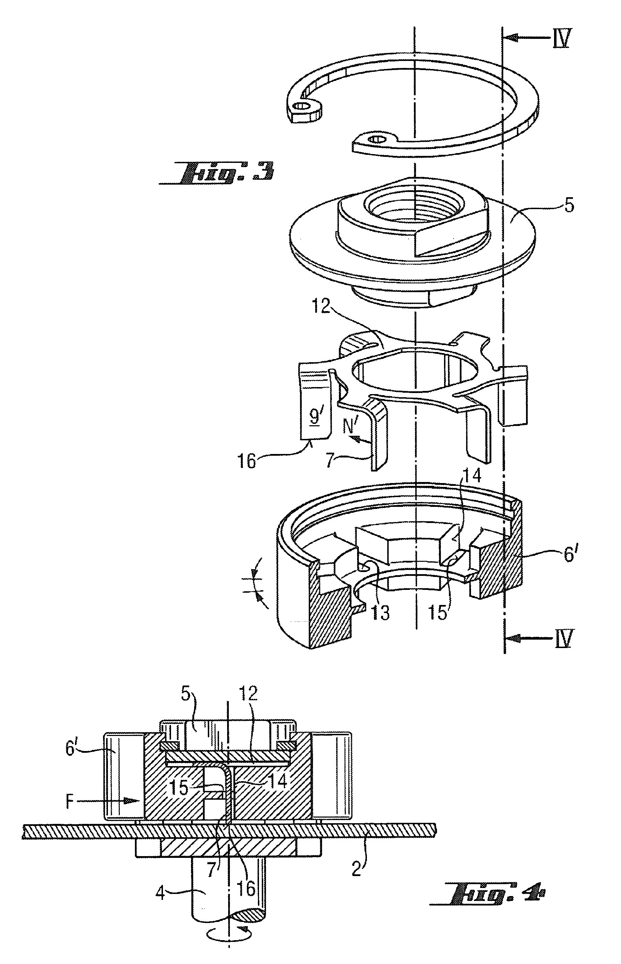

Nach Fig. 2 sind zwischen dem kreisringförmigen Axialanschlag 8 und dem Innengewindeteil 5 mehrere Blattfedern 7 umlaufend verteilt.

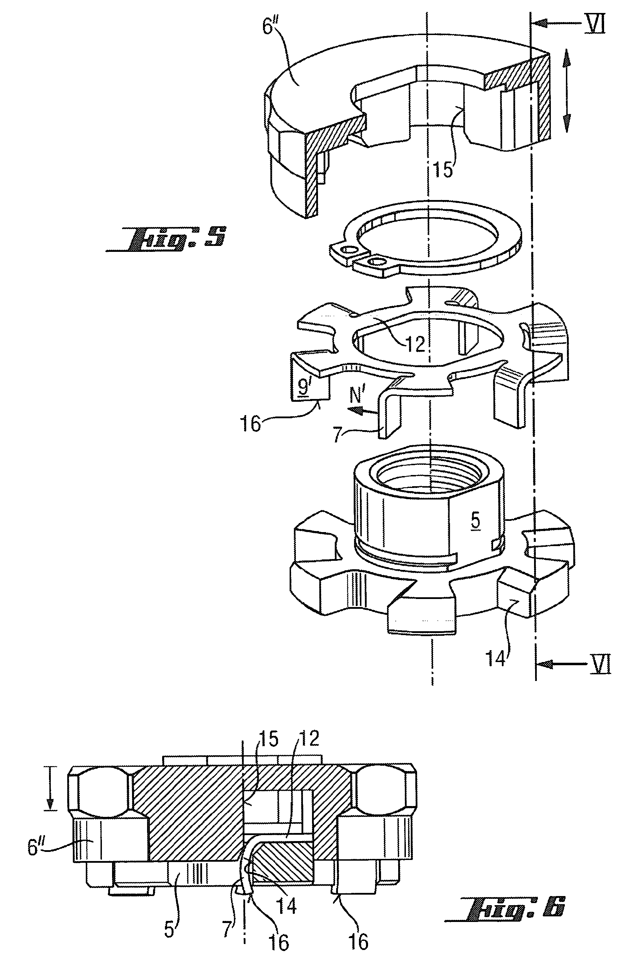

Nach Fig. 3 ist zwischen dem Innengewindeteil 5 und dem manuell versetzbaren Verspannmittel 6' ein Federkranz 12 angeordnet. Die auf dem gemeinsamen Federkranz 12 angeordneten Blattfedern 7 weisen einen gleichmässig flachen, ebenen Federbereich 9' auf, deren Normalen N' umfänglich orientiert sind . Das Verspannmittel 6' in Form eines drehversetzbaren Käfigs mit Durchbrüchen 13 für die Blattfedern 7 bildet einen tangential orientierten Tangentialanschlag 14 und einen entgegengesetzt tangential orientierten Gegentangentialanschlag 15 für die zwischen beiden angeordneten Blattfedern 7 aus.

Nach Fig. 4 liegt in der dargestellten Verspannung der Tangentialanschlag 14 sowie der entgegengesetzt tangential orientierte Gegentange ntialanschlag 15 frei benachbart zu den zwischen beiden angeordneten Blattfedern 7, deren Axialspannung unterhalb der Knicklast liegt, wodurch ein tangentiales Ausknicken unterbunden wird. Durch ein mit der Drehversetzung des Verspannmittels 6' erfolgten Aufbringen einer tangentialen Kraft F kann ein tangentiales Ausknicken der Blattfedern 7 manuell herbeigeführt werden, wodurch die Schnellspannmutter 1 entspannt wird. Die werkzeugseitigen Stirnkanten 16 der Blattfedern 7 stehen direkt in Presskontakt mit dem Werkzeug 2, das auf der antreibenden Arbeitsspindel 4 aufsitzt.

Nach Fig. 5 ist zwischen dem Innengewindeteil 5 und dem manuell versetzbaren Verspannmittel 6" ein Federkranz 12 angeordnet. Die auf dem gemeinsamen Federkranz 12 angeordneten Blattfedern 7 weisen einen gleichmässig flachen, ebenen Federbereich 9' auf, deren Normalen N' umfänglich orientiert sind. Das Innengewindeteil 5 bildet einen tangential orientierten Tangentialanschlag 14 und das manuell versetzbare Verspannmittel 6" in Form eines axial versetzbaren Käfigs einen entgegengesetzt tangential orientierten Gegentangentialanschlag 15 für die zwischen beiden angeordneten Blattfedern 7 aus.

Nach Fig. 6 lassen in der dargestellten Entspannung der Tangentialanschlag 14 und der entgegengesetzt tangential orientierte Gegentangentialanschlag 15 ein tangentiales Ausknicken der zwischen beiden angeordneten Blattfedern 7 zu.

## Patentansprüche

1. Schnellspannmutter zur haftreibschlüssigen Befestigung eines scheibenförmigen Werkzeuges (2) an einem Aussengewinde (3) einer um eine Drehachse (A) antreibenden Arbeitsspindel (4), mit einem zugeordneten Innengewindeteil (5) und einem manuell versetzbaren Verspannmittel (6, 6', 6") zur axialen Verspannung / Entspannung des Innengewindeteiles (5) bezüglich des Werkzeuges (2), **dadurch gekennzeichnet, dass** dem Innengewindeteil (5) werkzeugseitig zumindest eine sich im Wesentlichen parallel zur Drehachse (A) erstreckende Blattfeder (7) zugeordnet ist, über welche das Innengewindeteil (5) axial federnd mit dem Werkzeug (2) verspannbar ist.

2. Schnellspannmutter nach Anspruch 1, **dadurch gekennzeichnet, dass** der Blattfeder (7) werkzeugseitig ein bezüglich des Innengewindeteiles (5) axial versetzbarer Axialanschlag (8) zugeordnet ist, der optional kreisringförmig ausgeformt ist.

3. Schnellspannmutter nach Anspruch 1 oder 2, **dadurch gekennzeichnet, dass** mehrere einzelne Blattfedern (7) umfänglich verteilt angeordnet sind.

4. Schnellspannmutter nach einem der Ansprüche 1 bis 3, **dadurch gekennzeichnet, dass** die Blattfeder (7) einen gleichmässig flachen, ebenen Federbereich (9') aufweist.

5. Schnellspannmutter nach einem der Ansprüche 1 bis 3, **dadurch gekennzeichnet, dass** die Blattfeder (7) einen gleichmässig flachen, axialen Kreiszylindermantelsegmentstreifen als Federbereich (9) aufweist.

6. Schnellspannmutter nach einem der vorherigen Ansprüche, **dadurch gekennzeichnet, dass** die Normale (N) der Blattfeder (7) radial orientiert ist.

7. Schnellspannmutter nach Anspruch 6, **dadurch gekennzeichnet, dass** der Axialanschlag (8) oder das Innengewindeteil (5) einen nach aussen orientierten, Innenradialanschlag (10) und das manuell versetzbare Verspannmittel (6) einen nach innen orientierten Aussenradialanschlag (11) für die zwischen beiden angeordnete Blattfeder (7) ausbildet.

8. Schnellspannmutter nach Anspruch 7, **dadurch gekennzeichnet, dass** das Verspannmittel (6) als eine axial manuell versetzbare Hülse ausgebildet ist.

9. Schnellspannmutter nach einem der Ansprüche 1 bis 5, **dadurch gekennzeichnet, dass** die Normale (N') der Blattfeder (7) umfänglich orientiert ist.

10. Schnellspannmutter nach Anspruch 9, **dadurch gekennzeichnet, dass** der Axialanschlag (8) oder das Innengewindeteil (5) einen tangential orientierten, Tangentialanschlag (14) und das manuell versetzbare Verspannmittel (6") einen entgegengesetzt tangential orientierten Gegentangentialanschlag (15) für die zwischen beiden angeordnete Blattfeder (7) ausbildet.

11. Schnellspannmutter nach Anspruch 9, **dadurch gekennzeichnet, dass** das manuell versetzbare Verspannmittel (6") einen tangential orientierten Tangentialanschlag (14) und einen entgegengesetzt tangential orientierten Gegentangentialanschlag (15) für die zwischen beiden in einem Durchbruch (13) angeordnete Blattfeder (7) ausbildet.

12. Schnellspannmutter nach Anspruch 9 oder 10, **dadurch gekennzeichnet, dass** das Verspannmittel (6, 6") als ein manuell drehversetzbarer oder axial versetzbarer Käfig ausgebildet ist.

## Claims

1. A quick-change nut for the adhesive friction fastening of a disc-shaped tool (2) to a male thread (3) of a working spindle (4) driving about a rotation axis (A), with an associated female thread section (5) and a manually displaceable clamping means (6, 6', 6") for the axial clamping / relief of the female thread section (5) relative to the tool (2), **characterised in that** at least one leaf spring (7) extending essentially parallel to the rotation axis (A) is assigned to the female thread section (5) on the tool side, by means of which spring the female thread section (5) can be clamped to the tool (2) in an axially resilient manner.

2. The quick-change nut according to Claim 1, **characterised in that** an axial stop (8), which is axially displaceable relative to the female thread section (5) on the tool side, is assigned to the leaf spring (7), which stop is optionally of an annular shape.

3. The quick-change nut according to Claim 1 or 2, **characterised in that** a plurality of individual leaf springs (7) are arranged so that they are distributed around the circumference.

4. The quick-change nut according to one of Claims 1 to 3, **characterised in that** the leaf spring (7) has a uniformly flat, smooth spring region (9').

5. The quick-change nut according to one of Claims 1 to 3, **characterised in that** the leaf spring (7) has a uniformly flat, axial jacket segment strip of a regular cylinder as its spring region (9).

6. The quick-change nut according to one of the preceding claims, **characterised in that** the normal (N) of the leaf spring (7) is radially orientated.

7. The quick-change nut according to Claim 6, **characterised in that** the axial stop (8) or the female thread section (5) forms an outwardly orientated inner radial stop (10), and n that the manually displaceable clamping means (6) forms an inwardly orientated outer radial stop (11) for the leaf spring (7) arranged between both.

8. The quick-change nut according to Claim 7, **characterised in that** the clamping means (6) is designed as an axially manually displaceable sleeve.

9. The quick-change nut according to one of Claims 1 to 5, **characterised in that** the normal (N') of the leaf spring (7) is circumferentially orientated.

10. The quick-change nut according to Claim 9, **characterised in that** the axial stop (8) or the female thread section (5) forms a tangentially orientated, tangential stop (14), and **in that** the manually displaceable clamping means (6") forms an opposing tangentially orientated tangential counter-stop (15) for the leaf spring (7) arranged between both.

11. The quick-change nut according to Claim 9, **characterised in that** the manually displaceable clamping means (6") forms a tangentially orientated tangential stop (14) and an opposing tangentially orientated tangential counter-stop (15) for the leaf spring (7) arranged between both in an opening (13).

12. The quick-change nut according to Claim 9 or 10, **characterised in that** the clamping means (6, 6") is designed as a manually rotationally displaceable or axially displaceable cage.

## Revendications

1. Écrou à serrage rapide pour la fixation avec frottement par adhérence d'un outil en forme de disque (2) sur un filetage extérieur (3) d'une broche de travail (4) qui l'entraîne autour d'un axe de rotation (A), comprenant une partie taraudée associée (5) et un moyen de serrage à déplacement manuel (6, 6', 6") pour le serrage/desserrage axial de la partie taraudée (5) par rapport à l'outil (2), **caractérisé en ce qu'**à la partie taraudée (5) est associé, côté outil, au moins un ressort à lame (7) qui s'étend sensiblement parallèlement à l'axe de rotation (A) et par l'intermédiaire duquel la partie taraudée (5) peut être serrée de manière axialement élastique avec l'outil (2).

2. Écrou à serrage rapide selon la revendication 1, **caractérisé en ce qu'**au ressort à lame (7) est associée, côté outil, une butée axiale (8) qui est apte à se déplacer axialement par rapport à la partie taraudée (5) et qui, optionnellement, est conformée en couronne.

3. Écrou à serrage rapide selon la revendication 1 ou 2, **caractérisé en ce que** plusieurs ressorts à lames individuels (7) sont disposés en étant répartis sur la périphérie.

4. Écrou à serrage rapide selon une des revendications 1 à 3, **caractérisé en ce que** le ressort à lame (7) comporte une zone élastique plane et uniformément plate (9').

5. Écrou à serrage rapide selon une des revendications 1 à 3, **caractérisé en ce que** le ressort à lame (7) comporte, comme zone élastique (9), une bande axiale, uniformément plate en segment d'enveloppe périphérique cylindro-circulaire.

6. Écrou à serrage rapide selon une des revendications précédentes, **caractérisé en ce que** la normale (N) du ressort à lame (7) est orientée radialement.

7. Écrou à serrage rapide selon la revendication 6, **caractérisé en ce que** la butée axiale (8) ou la partie taraudée (5) forme une butée radiale intérieure (10) orientée vers l'extérieur, et le moyen de serrage déplaçable manuellement (6) forme une butée radiale extérieure (11) orientée vers l'intérieur pour le ressort à lame (7) disposé entre les deux.

8. Écrou à serrage rapide selon la revendication 7, **caractérisé en ce que** le moyen de serrage (6) est conformé en manchon à déplacement manuel axial.

9. Écrou à serrage rapide selon une des revendications 1 à 5, **caractérisé en ce que** la normale (N') du ressort à lame (7) est orientée périphériquement.

10. Écrou à serrage rapide selon la revendication 9, **caractérisé en ce que** la butée axiale (8) ou la partie taraudée (5) forme une butée tangentielle (14) orientée tangentiellement, et le moyen de serrage déplaçable manuellement (6") forme une contre-butée tangentielle (15) orientée tangentiellement en sens opposé pour le ressort à lame (7) disposé entre les deux.

11. Écrou à serrage rapide selon la revendication 9, **caractérisé en ce que** le moyen de serrage déplaçable manuellement (6") comporte une butée tangentielle orientée tangentiellement (14) et une contre-butée tangentielle (15) orientée tangentiellement en sens opposé pour le ressort à lame (7) disposé entre les deux dans un passage (13).

12. Écrou à serrage rapide selon la revendication 9 ou 10, **caractérisé en ce que** le moyen de serrage (6, 6") est conformé en cage déplaçable manuellement en rotation ou déplaçable axialement.
